Europäisches Patentamt

European Patent Office

Office européen des brevets

(11) Veröffentlichungsnummer: **0 261 675**
**A2**

## (12) EUROPÄISCHE PATENTANMELDUNG

(21) Anmeldenummer: 87113953.1

(22) Anmeldetag: 24.09.87

(51) Int. Cl.4: **G02B 6/44**

(30) Priorität: 26.09.86 DE 3632849

(43) Veröffentlichungstag der Anmeldung:
**30.03.88 Patentblatt 88/13**

(84) Benannte Vertragsstaaten:
**AT BE CH DE FR GB LI NL**

(71) Anmelder: **Standard Elektrik Lorenz Aktiengesellschaft**
**Lorenzstrasse 10**
**D-7000 Stuttgart 40(DE)**

(84) **DE**

(71) Anmelder: **Alcatel N.V.**
**De Lairessestraat 153**
**NL-1075 HK Amsterdam(NL)**

(84) **BE CH FR GB LI NL AT**

(72) Erfinder: **Grögl, Ferdinand**
**Dürrenstrasse 42**
**D-7141 Oberstenfeld(DE)**
Erfinder: **Niyazi, Ismat**
**Paracelsusstrasse 21**
**D-7000 Stuttgart(DE)**

(74) Vertreter: **Graf, Georg Hugo, Dipl.-Ing. et al**
**Standard Elektrik Lorenz AG Patent- und Lizenzwesen Postfach 30 09 29**
**D-7000 Stuttgart 30(DE)**

(54) **Optisches Kabel.**

(57) Es ist ein optisches Kabel mit einem komprimierbaren Polsterelement (2) beschrieben, das von einem Geflecht (3) umgeben ist. Um das Geflecht (3) sind Lichtwellenleiter verseilt.

Bei Zugbeanspruchung und entsprechender Dehnung des Kabels zieht sich das Geflecht (3) zusammen und bewirkt eine Kompression des Polsterelements (2). Daher können die Lichtwellenleiter (4) einen kleineren Mittenkreisdurchmesser einnehmen ohne kräftemäßig einen Beitrag zur Kompression des Polsterelements (2) leisten zu müssen.

Fig 1

## Optisches Kabel

Die Erfindung bezieht sich auf ein optisches Kabel gemäß dem Oberbegriff des Hauptanspruchs.

Aus der DE-OS 33 38 263 ist ein derartiges Kabel bekannt. Es enthält mehrere Lichtwellenleiter, die mit mehreren komprimierbaren Blindelementen abwechselnd angeordnet um ein komprimierbares Zentralelement verseilt sind. Bei einer Dehnung des Mantels können die Lichtwellenleiter einen kleineren Mittenkreisdurchmesser einnehmen, und dadurch die aufgetretene Längenänderung ausgleichen. Dabei müssen sie aber die Kräfte aufnehmen, die zur Kompression des Zentralelements erforderlich sind.

Der Erfindung liegt die Aufgabe zugrunde ein optisches Kabel anzugeben, bei dem bei Längenänderungen des Kabels die Lichtwellenleiter praktisch keine Kräfte aufnehmen müssen.

Die Lösung dieser Aufgabe erfolgt mit den im Kennzeichen des Hauptanspruchs genannten Mitteln. Vorteilhafte Weiterbildungen können den Unteransprüchen entnommen werden.

Die Erfindung wird nachstehend anhand eines Ausführungsbeispiel erläutert. Es zeigt:

Fig. 1 ein schichtweise freigelegtes Ende des erfindungsgemäßen Kabels,

Fig. 2 einen Querschnitt durch das Kabel nach Fig. 1.

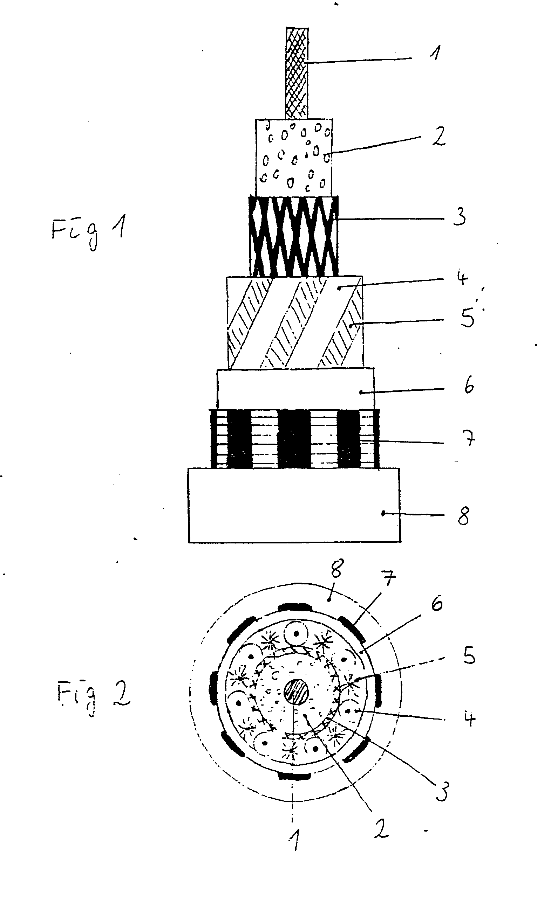

Weitere Ausführungen sind in der Beschreibung enthalten.

Das in den Figuren gezeigte Kabel weist ein Zentralelement auf, das aus einem zug-und stauchfesten Kernelement 1, einem das Kernelement 1 konzentrisch umgebenden komprimierbaren Polsterelement 2 und einem über dem Polsterelement 2 angeordneten Geflecht 3 aus zugfesten Fäden oder Garnen besteht.

Um das Zentralelement ist eine Lage aus abwechselnd nebeneinanderliegenden Lichtwellenleitern 4 und Pufferelementen 5 verseilt. Darüber befindet sich eine Hülle 6.

Auf die Hülle 6 ist ein zugfester Kabelmantel aufgebracht, der aus einem mit einem feuchtigkeitsabsorbierenden Haftmittel appretierten Netzband 7 und einer darüber extrudierten Kunststoffschicht 8 besteht. Das Netzband 7 enthält längslaufende Aramid-und querlaufende Polyesterfäden. Die Kunststoffschicht besteht bei Luftkabeln vorzugsweise aus HDPE. Bei der Extrusion der Kunststoffschicht 8 verklebt sie mit dem Netzband 7.

Auf die Hülle 6 sind bei anderen Ausführungen des Kabels auch andere Kabelmäntel aufbringbar.

Das Kernelement 1 besteht beispielsweise aus glas-oder aramidfaserverstärktem Kunststoff oder einem Liquid-Crystal-Polymer. Es kann je nach Aufbau des Kabelmantels weggelassen sein. Das Polsterelement 2 besteht beispielsweise aus Moosgummi, vernetztem oder unvernetztem Weich-Polyurethanschaum, Spezialpolyestergarn oder Flockgarn. Das Geflecht 3 besteht vorzugsweise aus Glas-oder Aramidgarnen.

Bei einer Zugbeanspruchung des Kabels und der daraus resultierenden Kabeldehnung wird das schlauchförmige Geflecht 3 ebenfalls länger und dadurch in seinem Durchmesser kleiner, wodurch eine Kompression des Polsterelements 2 bewirkt ist. Die Steigung des Geflechts 3 ist größer als der Verseilschlag der Lichtwellenleiter 4, sodaß die Zugkräfte praktisch nur auf das Geflecht 3 einwirken. Die Lichtwellenleiter 4 können somit einen kleineren Mittenkreisdurchmesser einnehmen, ohne daß dabei nennenswerte Kräfte auf sie einwirken. Lediglich die mit den Lichtwellenleitern 4 verseilten Pufferelemente 5 werden dabei komprimiert. Die Pufferelemente 5 bestehen vorzugsweise aus Flockgarn, das sehr leicht komprimierbar ist.

Bei einer weiteren Ausführung des Kabels sind die Pufferelemente 5 weggelassen. Der kleinstmögliche Mittenkreisdurchmesser der Lichtwellenleiter ist theoretisch dann erreicht, wenn sich die Lichtwellenleiter berühren.

Die Hülle 6 besteht entweder aus einer mehrfachen Kunststoffolienbewicklung aus beispielsweise einer Polyesterfolie und einer darüberliegenden Polyäthylenfolie oder aus einem dünnwandigen, extrudierten Kunststoffrohr in dem ein längslaufendes Faserstoffband aus Polyestervlies oder Quellvlies angeordnet ist.

### Ansprüche

1. Optisches Kabel, dessen Kabelseele ein komprimierbares Zentralelement enthält, um das mindestens ein Lichtwellenleiter verseilt ist, **dadurch gekennzeichnet**, daß das komprimierbare Zentralelement ein Geflecht (3) aus zugfesten Fäden oder Garnen aufweist, das über einem Polsterelement (2) angeordnet ist.

2. Optisches Kabel, nach Anspruch 1, dadurch gekennzeichnet, daß das Geflecht (3) zugfeste Glas-und/oder Kunststoffäden, insbesondere Aramidgarne enthält.

3. Optisches Kabel nach Anspruch 1 oder 2, dadurch gekennzeichnet, daß das komprimierbare Zentralelement ein zug-und stauchfestes Kernelement (1) enthält.

4. Optisches Kabel nach einem der vorhergehenden Ansprüche, dadurch gekennzeichnet, daß es einen zugfesten Mantel mit einem zugfesten, längslaufenden Netzband (7), auf das eine Kunststoffhülle (8) aufextrudiert ist, enthält.

5. Optisches Kabel nach Anspruch 4, dadurch gekennzeichnet, daß das Netzband (7) aus Aramid- und/oder Glaslängs-und Kunststoffquerfäden besteht.

6. Optisches Kabel nach Anspruch 4 oder 5, dadurch gekennzeichnet, daß das Netzband (7) mit einem Haftmittel appretiert ist.

7. Optisches Kabel nach Anspruch 6, dadurch gekennzeichnet, daß das Haftmittel feuchtigkeitsabsorbierende Eigenschaften aufweist

Fig 1

Fig 2

F. Grögl 14-2